# EUROPÄISCHE PATENTANMELDUNG

(11) **EP 3 942 986 A1**
(43) Veröffentlichungstag der Anmeldung: **26.01.2022**
(21) Anmeldenummer: 21180357.2
(22) Anmeldetag: 18.06.2021
(51) Int. Cl.: A47L 9/14, B01D 39/16, B29B 17/00

(54) **STAUBSAUGERBEUTEL**

(30) Priorität: 24.07.2020 DE 102020119583
(71) Anmelder: Wolf PVG GmbH & Co. KG, 32427 Minden (DE)
(72) Erfinder: CZADO, Wolfgang, 32457 Porta Westfalica (DE)
(74) Vertreter: Dantz, Jan Henning

(57) **Zusammenfassung**

Ein Staubsaugerbeutel umfasst ein luftdurchlässiges Filtermaterial zum Umschließen eines Sammelraumes für Staub, mit einer Einlassöffnung für eingesaugte Luft, wobei das luftdurchlässige Filtermaterial mindestens eine Lage aus einem Vliesstoff und mindestens eine luftdurchlässige Kunststofffolie umfasst. Erfindungsgemäß ist die luftdurchlässige Folie aus Kunststoff aus einem recyclierten Material hergestellt, so dass weniger Rohstoffe zur Herstellung eingesetzt werden müssen.

## Beschreibung

Die vorliegende Erfindung betrifft einen Staubsaugerbeutel, umfassend ein luftdurchlässiges Filtermaterial zum Umschließen eines Sammelraumes für Staub, mit einer Einlassöffnung für eingesaugte Luft, wobei das luftdurchlässige Filtermaterial mindestens eine Lage aus einem Vliesstoff und mindestens eine luftdurchlässige Kunststofffolie umfasst.

In der US 2009/223190 A1 ist ein Filtermaterial zur Herstellung eines Staubsaugerbeutels offenbart, bei dem textile Materialien aus Kleidungsstücken wiederverwendet werden, in dem sie zerkleinert und bei einem Aufbau eines mehrlagigen Filtermaterials zugegeben werden. Das recycelte Fasermaterial weist insbesondere Baumwollfasern auf und wird über ein flüssiges Bindemittel verklebt. Dies wirkst sich nachteilig auf die Luftdurchlässigkeit aus.

Zur Erhöhung des Anteils an recycliertem Material ist in der EP 3 219 373 A1 offenbart, mehrere Lagen des Staubsaugerbeutels und die Halteplatte aus einem recyclierten Material herzustellen. Die Festigkeit des mehrlagigen Filtermaterials ist allerdings begrenzt durch inhomogene Strukturen in den Lagen aus recycliertem Material.

Es ist daher die Aufgabe der vorliegenden Erfindung, einen Staubsaugerbeutel bereitzustellen, der einen hohen Anteil an wiederverwertbaren Materialien einsetzen kann, und eine hohe Staubspeicherfähigkeit und eine hohe mechanische Festigkeit aufweist.

Diese Aufgabe wird mit einem Staubsaugerbeutel mit den Merkmalen des Anspruches 1 gelöst. Die abhängigen Ansprüche stellen vorteilhafte Weiterbildungen dar.

Erfindungsgemäß umfasst das Filtermaterial eine luftdurchlässige Folie aus Kunststoff, die aus einem recyclierten Material hergestellt ist. Im Unterschied zu aus dem Stand der Technik bekannten Staubsaugerbeuteln wird somit weniger oder gar kein frisches (virgin) Kunststoffmaterial zur Herstellung der Folie eingesetzt. Dadurch kann der Staubsaugerbeutel unter Einsparung von Rohmaterialien hergestellt werden, da das recyclierte Material vorher bereits in Verwendung war und durch ein Recycling-Verfahren wiedergewonnen wurde. Dies ermöglicht eine im Wesentlichen rohstoffneutrale Herstellung des Staubsaugerbeutels, der als Wegwerfprodukt nach dem Gebrauch wegen dem eingesammelten Staub schlecht wiederverwertet werden kann.

Für einen geringen Druckabfall im Betrieb des Staubsaugerbeutels kann die luftdurchlässige Folie aus Kunststoff perforiert oder geschlitzt sein und weist bevorzugt eine Luftdurchlässigkeit von mehr als 600 L / (m² x s), insbesondere mehr als 1000 L / (m² x s) auf. Die luftdurchlässige Kunststofffolie kann bei einem Staubsaugerbeutel an der Innenseite als Prallschutz eingesetzt werden, um beim Einsaugen von spitzen oder abrasiven Teilchen die Gefahr einer Beschädigung des Staubsaugerbeutels zu minimieren. Alternativ oder zusätzlich kann eine Kunststofffolie auch an der Außenseite des Staubsaugerbeutels als Schutzschicht vorgesehen sein.

Die luftdurchlässige Folie aus Kunststoff kann einlagig ausgebildet sein, ist aber vorzugsweise mehrlagig ausgebildet. Dann kann mindestens eine Lage aus recycliertem Kunststoff und mindestens eine Lage aus einem nicht-recyclierten Kunststoff hergestellt sein, so dass die einzelnen Lagen unterschiedlichen Aufgaben hinsichtlich der Festigkeit oder Dichtigkeit übernehmen können.

Vorzugsweise umfasst das recyclierte Material ein Polymermaterial, das ein Molekulargewicht über 45.000 g / mol, einen Schmelzpunkt zwischen 130 und 300°C. Bei Recyclingverfahren werden häufig Polyester verarbeitet, die ein niedriges Molekulargewicht (Mw unter 35.000 g / mol, typischerweise zwischen 15.000 und 30.000 g / mol) besitzen und einen Schmelzpunkt im Bereich unter 150°C aufweisen. Durch den Einsatz eines Polymers mit höherem Molekulargewicht lassen sich auch aus einem recyclierten Polymermaterial Folien herstellen, die eine ausreichend Reißfestigkeit besitzen und den hohen mechanischen Belastungen in einem Staubsaugerbeutel Stand halten.

Vorzugsweise weist die Folie aus Kunststoff einen Meltflowindex (MFI 230°C; 2,16Kg gem. ISO 179) auf, der beispielsweise nach ISO 1133-1:2011 gemessen wird. Der MFI des Kunststoffes zur Herstellung der Folie kann bevorzugt kleiner 20 sein, insbesondere kleiner 10. Dadurch lässt sich der Kunststoff besser verarbeiten und die Folie mit homogener Dicke herstellen. Der MFI ist kann dabei zur indirekten Bestimmung des Molekulargewichtes eingesetzt werden. Die Folie kann beispielsweise Polypropylen enthalten oder überwiegend daraus hergestellt sein.

Zusätzlich zu der Folie kann der Staubsaugerbeutel ein mehrlagiges luftdurchlässige Filtermaterial aufweisen, wobei das luftdurchlässige Material und mindestens eine Feinfilterlage umfasst, die durch einen Meltblown-Vliesstoff mit einer Grammatur von 10 bis 120 g/m2, insbesondere 15 bis 60 g/m2, gebildet ist. Die Feinfilterlage kann in Luftströmungsrichtung von der Anströmseite zur Reinluftseite hin hinter einer Kapazitätslage angeordnet sein, die als Staubspeicherlage dient. Solche Kapazitätslagen können. Die Feinfilterlage kann die Filtrationsleistung für kleine Partikel verbessern. Zur weiteren Erhöhung der Abscheideleistung kann die Feinfilterlage elektrostatisch durch Coronaentladung oder Hydrocharging aufgeladen sein. Auch bei der mindestens einen Feinfilterlage kann ein recyclierter Kunststoff eingesetzt werden, beispielsweise rPET und/oder rPP.

In einer weiteren Ausgestaltung umfasst das luftdurchlässige mehrlagige Filtermaterial eine Stützlage aus einem Spinnvlies oder Scrim mit einer Grammatur von 10 bis 90 g/m², die vorzugsweise aus mindestens einem recyclierten Kunststoff, insbesondere aus rPET hergestellt ist. Der recyclierte Kunststoff der Stützlage kann aus der Gruppe bestehend aus recyclierten Polyestern, insbesondere recycliertem Polyethylenterephtha-lat (rPET), recycliertem Polybutylenterephthalat (rPBT), recylcierter Polymilch-säure (rPLA), recycliertem Polyglycolid und/oder recycliertem Polycaprolac-ton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden oder Mischungen daraus, ausgewählt sein.

Das Filtermaterial weist vorzugsweise eine Lage mit Nanofasern auf. Der Begriff Nanofaser wird gemäß der Norm DIN SPEC 1 121 :2010-02 (CEN ISO/TS 27687:2009) verwendet.

Optional kann das Filtermaterial des Staubsaugerbeutels eine weitere Stützlage in Form einer trockengelegten Vliesstofflage oder in Form einer Extrusions-Vliesstofflage aufweisen. Die trockengelegte Vliesstofflage kann staub- und/oder faser-förmiges recycliertes Material aus der Herstellung von Textilien, insbesondere Baumwolltextilien, und/oder aus der Wollschur und/oder Samenfasern umfassen. Alternativ oder zusätzlich kann die Stützlage Stapelfasern aus recycliertem Kunststoff, insbesondere rPET oder rPP, umfassen. Die Extrusions-Vliesstofflage kann Mono- oder Bikomponenten-Filamente oder Fasern aus recycliertem Kunststoff, insbesondere rPET oder rPP, umfassen.

Gemäß einer bevorzugten Ausführungsform besitzt das Filtermaterial folgende Lagenfolge ausgehend von der Anströmseite: Eine Stützlage, mindestens eine Kapazitätslage zur Staubspeicherung, eine weitere Stützlage, mindestens eine Feinfilterlage sowie eine weitere Stützlage. Das Filtermaterial besitzt somit mindestens fünf Lagen. Eine der Stützlagen ist aus einer Kunststofffolie hergestellt, die eine hohe mechanische Festigkeit aufweist. Die einzelnen Lagen können über Schweißverbindungen miteinander verbunden oder miteinander verklebt sein. Dieser Aufbau besitzt fünf Lagen. Es ist natürlich möglich, dass das Filtermaterial nur zwei bis vier Lagen oder mehr als fünf Lagen aufweist. In einer einfachen Ausgestaltung ist die Lage Meltblow zwischen zwei Stützlagen angeordnet, beispielweise aus Spunbond oder eine Scrim.

Die mindestens eine Kapazitätslage kann rPET-, rPP-Stapelfasern oder Filamente enthalten aus daraus hergestellt sein. Ferner können cellulosehaltige Fasern eingesetzt werden. Für die Kapazitätslage können zunächst Stapelfasern auf eine Stützlage im Airlay-Verfahren abgelegt werden, die dann in einem Vliesbindeschritt thermisch durch den Einsatz von Bikomponentenfasern oder Bindefasern verfestigt wird. Alternativ oder zusätzlich kann auch eine chemische Verfestigung, beispielsweise mit einem flüssigen oder pulverförmigen Bindemittel in Form von Latex, Hotmelt, eine Verfestigt zu einem Vliesstoff vorgenommen werden.

Als Stützlagen können zusätzlich zu der Kunststofffolie auch Spinnvlieslagen eingesetzt werden, beispielsweise aus rPET oder rPP mit einem Flächengewicht von 5 bis 50 g/m² und einem Titer von 1 dtex bis 15 dtex.

Als Feinfilterlage wird mindestens eine Lage Meltblown aus rPET oder rPP mit einem Flächengewicht von jeweils 5 bis 30 g/m² eingesetzt. Zusätzlich kann noch eine Lage aus einem Meltblown Vliesstoff aus virgin PP vorhanden sein.

Der Staubsaugerfilterbeutel kann zudem eine die Einlassöffnung umgebende Halteplatte aufweisen, die aus einem oder mehreren recycelten Kunststoffen hergestellt ist, vorzugsweise im Spritzgußverfahren. Die Halteplatte kann rPET in einem hohen Anteil umfassen, beispielsweise zu mindestens 80 Gew.%.

Bei Einsatz von Recyclaten in den Lagen kann der Anteil an Recyclaten bezogen auf den gesamten Staubsaugerbeutel bis zu 97 Gew.-% betragen. Bevorzugt ist ein Recyclat-anteil zwischen 50 Gew.-% bis 92 Gew.-%.

Der Lagenaufbau des Filtermaterials kann beispielsweise von der Antrömseite zur Abströmseite wie folgt aufgebaut sein: Spunbond / Kapazitätslage / Spunbond / Meltblow / Spunbond / Perforierte Folie. Dadurch wird ein stabiler Beutel mit hoher Staubspeicherfähigkeit erhalten.

Ein Ausführungsbeispiel eines erfindungsgemäßen Staubsaugerbeutel umfasst eine Filtermaterial mit folgendem Aufbau:

| | Material | Grammatur [g/m2] | Gewicht pro Beutel [g] | Anteil Recyclat [%] |
|---|---|---|---|---|
| Stützlage | Kunststofffolie | 10 | 1,5 | 100 |
| Staubspeicherlage | Airlaid aus recyceltem Papier | 50 | 7,5 | 85 |
| Stützlage | Kunststofffolie | 10 | 1,5 | 100 |
| Feinfilter | Meltblown | 25 | 3,75 | 0 |
| Stützlage | Kunststofffolie | 20 | 3 | 100 |

Neben dem Einsatz einer luftdurchlässigen Kunststofffolie, können weitere Lagen in dem Filtermaterial vorhanden sein, beispielsweise aus Meltblow, Spinnvliesen, Krempelvliesen und/oder wenigstens eine textile Lage. Diese weiteren Lagen können ganz oder teilweise aus recyclierten Materialien, wie Kunstfasern, aber auch aus Naturfasern hergestellt sein. Die Fasern können dabei Monofasern oder versponnene Garne sein. Die Lage kann als Textil- oder Flächengebilde aus dem Garn durch Weben, maschenbildende Verfahren wie Stricken, Wirken, Häkeln, Nadelbinden, Filzen, Flechten und/oder Knüpfen hergestellt sein.

Die Folie kann vorzugsweise als Monolage ausgebildet sein, beispielsweise aus 100% rPP oder einem anderen recyclierten Kunststoff.

Alternativ kann auch eine mehrlagige Folie mit wenigstens einer Lage aus r-PP und wenigstens einer Lage aus nicht recycliertem Neu-PP verwendet werden, wobei die Lage oder Lagen aus Neu-PP maximal 30 % des Gesammtfoliengewichts ausmachen. Die Dicke der Folie beträgt vorzugsweise zwischen 5 - 150 µm.

## Patentansprüche

1. Staubsaugerbeutel, umfassend ein luftdurchlässiges Filtermaterial zum Umschließen eines Sammelraumes für Staub, mit einer Einlassöffnung für eingesaugte Luft, wobei das luftdurchlässige Filtermaterial mindestens eine Lage aus einem Vliesstoff und mindestens eine luftdurchlässige Kunststofffolie umfasst, **dadurch gekennzeichnet, dass** die luftdurchlässige Folie aus Kunststoff aus einem recyclierten Material hergestellt ist.

2. Staubsaugerbeutel nach Anspruch 1, **dadurch gekennzeichnet, dass** die luftdurchlässige Folie aus Kunststoff perforiert ist und eine Luftdurchlässigkeit von mehr als 500 L / (m² x s) aufweist.

3. Staubsaugerbeutel nach einem der Ansprüche 1 oder 2, **dadurch gekennzeichnet, dass** die luftdurchlässige Folie aus Kunststoff mehrlagig ausgebildet ist und mindestens eine Lage aus recycliertem Kunststoff und mindestens eine Lage aus einem nicht-recyclierten Kunststoff hergestellt ist.

4. Staubsaugerbeutel nach einem der Ansprüche 1 bis 3, **dadurch gekennzeichnet, dass** das recyclierte Material ein Polymermaterial umfasst, das ein Molekulargewicht über 45.000 g / mol, einen Schmelzpunkt zwischen 130°C und 300°C umfasst.

5. Staubsaugerbeutel nach einem der vorhergehenden Ansprüche, **dadurch gekennzeichnet, dass** das luftdurchlässige Filtermaterial mehrlagig aufgebaut ist, wobei das luftdurchlässige Material und mindestens eine Feinfilterlage umfasst, die durch einen Meltblown-Vliesstoff mit einer Grammatur von 10 bis 120 g/m², insbesondere 15 bis 60 g/m², gebildet ist.

6. Staubsaugerbeutel nach vorhergehendem Anspruch, **dadurch gekennzeichnet, dass** das luftdurchlässige Filtermaterial mehrlagig aufgebaut ist und zusätzlch zu der Kunststofffolie eine Stützlage aus einem Spinnvlies oder Scrim mit einer Grammatur von 10 bis 90 g/m2 umfasst, die aus mindestens einem recyclierten Kunststoff, insbesondere aus rPET gebildet ist.

7. Staubsaugerbeutel nach Anspruch 6, **dadurch gekennzeichnet, dass** der recyclierte Kunststoff der Stützlage ausgewählt ist aus der Gruppe bestehend aus recyclierten Polyestern, insbesondere recycliertem Polyethylenterephtha-lat (rPET), recycliertem Polybutylenterephthalat (rPBT), recylcierter Polymilch-säure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden oder Mischungen daraus.

8. Staubsaugerbeutel nach einem der vorhergehenden Ansprüche, **dadurch gekennzeichnet, dass** die luftdurchlässige Folie aus Kunststoff einen Meltflowindex nach ISO 1133-1:2011 kleiner 20 aufweist, insbesondere kleiner 10.
